# FASCICULE DE BREVET EUROPEEN

(11) **EP 4 073 999 B1**
(45) Date de publication et mention de la délivrance du brevet: **24.12.2025**
(21) Numéro de dépôt: 20829003.1
(22) Date de dépôt: 30.11.2020
(51) Int. Cl.: H04L 9/40, H04L 61/4511, H04L 67/02

(54) **PROCÉDÉ DE TRAITEMENT DE REQUÊTES DE RÉSOLUTION DE NOM DE DOMAINE**
VERFAHREN ZUR BEARBEITUNG VON ANFRAGEN ZUR DOMAINNAMENAUFLÖSUNG
METHOD FOR PROCESSING DOMAIN NAME RESOLUTION REQUESTS

(30) Priorité: 13.12.2019 FR 1914412
(43) Date de publication de la demande: 19.10.2022
(73) Titulaire: Orange, 92130 Issy-les-Moulineaux (FR)
(72) Inventeur: BOUVET, Eric, 92326 CHÂTILLON CEDEX (FR); FONTAINE, Fabrice, 92326 CHÂTILLON CEDEX (FR)
(86) Numéro de dépôt international: PCT/FR2020/052223
(87) Numéro de publication internationale: WO 2021/116555

(56) Documents cités:
- US-A1- 2016 255 012
- HOFFMAN P ET AL: "DNS Queries over HTTPS (DoH)", RFC 8484, 19 October 2018 (2018-10-19), IETF, XP015128219

## Description

La présente invention concerne un procédé de traitement de requêtes, notamment de requêtes de résolution de nom de domaine.

Elle concerne en outre un dispositif d'interface, tel qu'une passerelle domestique, mettant en œuvre le procédé de traitement conforme à l'invention.

De manière classique, lorsqu'un dispositif client connecté à un réseau de communication adresse une requête de résolution de nom de domaine à un serveur de résolution de nom de domaine ou serveur DNS (pour « Domain Name System »), il utilise le protocole UDP (pour « User Datagram Protocol »)). Ces requêtes de résolution de nom de domaine sont envoyées « *en clair* », pouvant être interceptées et/ou manipulées par des tiers.

De nos jours, afin d'améliorer la sécurité et la confidentialité des utilisateurs des réseaux de communication, les requêtes de résolution de nom de domaine sont souvent adressées aux serveurs DNS en utilisant des protocoles sécurisés, tel que HTTPS (pour « HyperText Transfer Protocol Secure »). Le protocole HTTPS correspond au protocole HTTP combiné à un protocole de sécurisation des échanges client-serveur, tel que TLS (pour « Transport Layer Security ») ou SSL (pour « Secure Sockets Layer »), le protocole HTTPS permettant de chiffrer les requêtes de résolution de nom de domaine de manière à éviter l'écoute et/ou la manipulation des requêtes par des tiers.

L'utilisation du protocole HTTPS pour mettre en œuvre des résolutions de nom de domaine est connue comme DNS over HTTPS (DoH).

Les fournisseurs d'accès à un réseau de communication tel qu' Internet (FAI) utilisent les requêtes de résolution de nom de domaine émises par les terminaux de ses utilisateurs ou abonnés pour des tâches destinées à la protection des abonnés ou utilisateurs. Ainsi, des filtrages sont mis en œuvre par les fournisseurs d'accès à Internet, pour par exemple faire appliquer les lois en détectant les sites illégaux, pour permettre la mise en place de contrôles parentaux, et pour détecter des comportements malicieux tels que le détournement de requêtes de résolution de nom de domaine ou des résolutions de nom de domaine frauduleuses. En outre, les requêtes de résolution de nom de domaine sont utilisées par les fournisseurs d'accès à Internet pour mettre en œuvre d'autres opérations, telles que répartir la charge sur le réseau de communication.

Pour mettre en œuvre les opérations précitées, les fournisseurs d'accès à Internet dirigent les requêtes de résolution de nom de domaine émises par les terminaux de ses utilisateurs vers des serveurs DNS dits « de confiance ». En particulier, lorsqu'un terminal de l'utilisateur d'un abonné à un fournisseur d'accès émet une requête de résolution de nom de domaine, une passerelle domestique reliant le terminal de l'utilisateur au fournisseur d'accès à Internet, transmet la requête de résolution vers des serveurs DNS qui lui sont associés. Les serveurs DNS associés à la passerelle domestique peuvent être des serveurs DNS locaux, c'est-à-dire appartenant au fournisseur d'accès Internet, ou des serveurs DNS ne lui appartenant pas mais étant des serveurs DNS considérés par le fournisseur d'accès à Internet comme étant de confiance.

On notera que la passerelle domestique d'un fournisseur d'accès à Internet peut transmettre les requêtes de résolution vers des serveurs DNS associés en utilisant le protocole HTTP (requêtes envoyées « *en clair* ») ou le protocole HTTPS (requêtes envoyées chiffrées).

Aujourd'hui, certains navigateurs web installés sur les terminaux des utilisateurs utilisent des protocoles sécurisés tel que le protocole DNS over HTTPS pour effectuer les résolutions de nom de domaine. Dans ce cas, les requêtes de résolution sont envoyées directement vers des serveurs DNS supportant ce protocole et étant associées aux navigateurs sans que le fournisseur d'accès à Internet ait accès aux requêtes de résolution.

Par conséquent, certaines des requêtes de résolution émises par les terminaux des utilisateurs ne sont pas envoyées aux serveurs DNS associés à la passerelle domestique, les fournisseurs d'accès à Internet n'étant pas en mesure d'utiliser les requêtes de résolution pour des tâches telles que l'application de la loi, la détection de comportements malicieux ou le contrôle de la charge du réseau de communication.

L'état de la technique comprend les documents suivants :
- La demande de brevet US 2016/0255012 A1, publiée le 1er septembre 2016 sous le titre : « Method for mitigation of unauthorized data transfer over Domain Name Service (DNS) ».
- Le document IETF intitulée « DNS Queries over HTTPs (DoH) », Request for Comments 8484, d'octobre 2018. Ce dernier appartient à l'arrière-plan technologique.

La présente invention a pour but de permettre aux fournisseurs d'accès à Internet de contrôler le traitement de la totalité des requêtes de résolution de nom de domaine, même si le protocole DNS over HTTPS (ou autre protocole sécurisé) est utilisé pour les résolutions de nom de domaine, tout en garantissant la confidentialité et la sécurité des utilisateurs.

A cet effet, l'invention vise, selon un premier aspect, un procédé de traitement des requêtes émises par un terminal d'un utilisateur, le procédé étant mis en œuvre par un dispositif d'interface permettant l'accès du terminal de l'utilisateur à un réseau de communication.

Selon l'invention, lorsqu'une requête, dite première requête, reçue est détectée comme étant destinée à être transmise vers un serveur non autorisé par le dispositif d'interface, le procédé de traitement comporte :
- le blocage de la transmission de ladite première requête reçue ;
- la configuration du terminal de l'utilisateur de sorte qu'une seconde requête est émise par le terminal de l'utilisateur, destinée à être transmise vers un serveur de résolution associé audit dispositif d'interface ;
- la réception de la seconde requête par le dispositif d'interface à la suite de la mise en œuvre du blocage de la première requête reçue ; et
- la transmission vers le serveur de résolution associé au dispositif d'interface, de la seconde requête reçue ou d'une troisième requête générée par le dispositif d'interface à partir de la seconde requête.

Grâce aux caractéristiques du procédé, lorsque le dispositif d'interface détecte qu'une requête va être transmise à un serveur non autorisé par le
fournisseur d'accès au réseau de communication tel qu'Internet, il la transfère à l'un des serveurs de résolution autorisés.

On notera que les serveurs autorisés et non autorisés par le fournisseur d'accès au réseau de communication sont renseignées dans le dispositif d'interface. Ainsi, un serveur non autorisé par le dispositif d'interface est un serveur non autorisé par le fournisseur d'accès au réseau de communication. Autrement dit, le dispositif d'interface étant configuré selon les règles de fonctionnement du fournisseur d'accès au réseau de communication, il est configuré pour reconnaitre les serveurs autorisés et les serveurs non autorisés.

En pratique, la première requête et la seconde requête sont reçues par le dispositif d'interface en provenance du terminal de l'utilisateur.

La requête émise par le terminal de l'utilisateur, en particulier par un navigateur web installé dans le terminal de l'utilisateur, peut être une requête de résolution de nom de domaine. Le dispositif d'interface est typiquement une passerelle domestique.

On considère qu'un serveur de résolution associé au dispositif d'interface est un serveur de résolution autorisé par le fournisseur d'accès au réseau de communication. Le serveur de résolution associé au dispositif d'interface est un serveur de résolution parmi un ensemble de serveurs de résolution associé au dispositif d'interface.

Grâce à l'invention, lorsque le dispositif d'interface détecte qu'une première requête a été générée pour être émise vers un serveur non autorisé, une seconde requête est générée par le terminal de l'utilisateur, cette seconde requête étant destinée à être émise vers un serveur de résolution associé au dispositif d'interface ou serveur de résolution autorisé par le fournisseur d'accès au réseau de communication.

Par conséquent, lorsque le terminal de l'utilisateur, en particulier le navigateur web installé dans le terminal, essaie de diriger une requête de résolution vers un serveur de résolution non autorisé, le dispositif d'interface traite cette requête soit en la renvoyant vers un serveur de résolution autorisé soit en générant une troisième requête à partir de la deuxième requête et en envoyant ensuite cette troisième requête vers un serveur de résolution autorisé.

En pratique, un serveur non autorisé est un serveur différent des serveurs de résolution associés au dispositif d'interface et/ou un serveur faisant partie d'une liste dite de serveurs non autorisés par le fournisseur d'accès audit réseau de communication.

Ainsi, selon des modes de réalisation, il peut être vérifié si le serveur auquel une requête va être adressée correspond à un serveur associé au dispositif d'interface, si le serveur fait partie d'une liste de serveurs non autorisés, ou les deux.

Selon un mode de réalisation, une requête destinée à être transmise vers un serveur non autorisé correspond à une requête destinée à être transmise vers un serveur différent des serveurs de résolution associés au dispositif d'interface.

En d'autres termes, dans ce mode de réalisation, lorsque le dispositif d'interface détecte qu'une requête est destinée à être adressée vers un serveur de résolution différent des serveurs de résolution qui lui sont associés, une seconde requête est générée, cette seconde requête étant destinée à être émise vers l'un des serveurs de résolution qui lui sont associés.

Selon un autre mode de réalisation, une requête destinée à être transmise vers un serveur non autorisé correspond à une requête destinée à être transmise vers un serveur faisant partie d'une liste dite de serveurs non autorisés par le fournisseur d'accès audit réseau de communication.

Dans ce mode de réalisation, lorsque le dispositif d'interface détecte qu'une requête est destinée à être adressée vers un serveur appartenant à la liste de serveurs de résolution non autorisés, une seconde requête est générée par le terminal de l'utilisateur, cette seconde requête étant destinée à être émise via le dispositif d'interface vers un serveur de résolution associé au dispositif d'interface.

Selon encore un autre mode de réalisation, une requête destinée à être transmise vers un serveur non autorisé correspond à une requête destinée à être transmise vers un serveur différent des serveurs de résolution associés audit dispositif d'interface, ce serveur faisant partie de la liste dite de serveurs non autorisés.

Ainsi, selon des modes de réalisation, le dispositif d'interface peut avoir associé, soit une ou plusieurs listes répertoriant les serveurs de résolution autorisés, soit une ou plusieurs listes répertoriant les serveurs de résolution non autorisés, soit une ou plusieurs listes répertoriant les serveurs de résolution autorisés ainsi qu'une ou plusieurs listes répertoriant les serveurs de résolution non autorisés.

Les serveurs de résolution associés au dispositif d'interface appartiennent à un ensemble de serveurs comprenant des serveurs de résolution appartenant au fournisseur d'accès au réseau de communication tel qu'Internet ainsi que des serveurs de résolution externes au fournisseur d'accès au réseau de communication mais étant considérés comme étant des serveurs de résolution de confiance. Ces serveurs sont des serveurs de résolution autorisés par le dispositif d'interface, c'est-à-dire par le fournisseur d'accès au réseau de communication.

Au contraire, un serveur de résolution non autorisé par le dispositif d'interface ou par le fournisseur d'accès au réseau de communication, est un serveur de résolution n'appartenant pas à cet ensemble de serveurs de résolution.

En outre, comme indiqué ci-dessus, les serveurs de résolution non autorisés peuvent être répertoriés dans la liste dite de serveurs non autorisés.

Selon une caractéristique, le procédé de traitement comporte :
- la détermination à partir de la requête reçue, d'une adresse réseau représentative du serveur vers lequel la requête est destinée ; et
- vérification de l'adresse réseau déterminée pour déterminer si l'adresse déterminée correspond à un serveur non autorisé par le dispositif d'interface.

Ainsi, la détection d'une requête destinée à être émise vers un serveur non autorisé est mise en œuvre en fonction de l'adresse réseau déterminée. Cette adresse peut être une adresse de type « *Internet Protocol* » connue comme *« adresse IP ».*

Selon un mode de réalisation, lors de la vérification, il est vérifié si l'adresse réseau déterminée correspond à un serveur associé au dispositif d'interface. Si l'adresse ne correspond pas à une adresse d'un serveur associé au dispositif d'interface, l'adresse réseau déterminée correspond à un serveur non autorisé.

Selon un autre mode de réalisation, lors de la vérification, il est vérifié si l'adresse réseau déterminée correspond à un serveur dans la liste dite de serveurs non-autorisés. En cas positif, l'adresse déterminée correspond à un serveur non autorisé.

Selon une caractéristique, le procédé de traitement comporte la détermination à partir de la requête reçue, d'un port du dispositif d'interface désigné pour la destination de ladite requête reçue, et si le port déterminé correspond à un port permettant d'établir une connexion sécurisée, le procédé comporte en outre :
- la détermination à partir de la première requête reçue, d'une adresse réseau représentative du serveur vers lequel la première requête est destinée, et
- la vérification de l'adresse réseau déterminée pour déterminer si l'adresse réseau déterminée correspond à un serveur non autorisé par le dispositif d'interface.

Selon ce mode de réalisation, lorsqu'il est détecté que le port désigné pour la destination de la requête est un port permettant d'établir une connexion sécurisée, le dispositif d'interface soupçonnant l'émission d'une requête chiffrée, vérifie l'adresse réseau représentative du serveur afin de vérifier si le serveur vers lequel la requête est destinée est un serveur autorisé.

On notera que le fournisseur d'accès au réseau de communication permet l'établissement de communications sécurisées avec des serveurs autorisés. Ceci permet d'améliorer davantage la confidentialité et la sécurité des utilisateurs.

Selon une caractéristique, si le port déterminé correspond à un port permettant d'établir une connexion sécurisée et l'adresse réseau ne correspond pas à un serveur associé au dispositif d'interface ni à une adresse réseau d'un serveur dans la liste de serveurs non autorisés, le procédé comporte en outre:
- la génération d'une requête de test chiffrée destinée à être émise vers le serveur correspondant à l'adresse réseau déterminée ;
- l'émission de la requête de test vers ledit port déterminé; et
- si le dispositif d'interface reçoit une réponse à la requête de test en provenance du serveur, l'identification dudit serveur comme étant un serveur non autorisé.

Dans ce mode de réalisation, si un port permettant l'établissement d'une connexion sécurisée est utilisé et que l'adresse ne correspond pas à un serveur autorisé par le fournisseur d'accès au réseau de communication, le dispositif d'interface émet une requête de test pour vérifier si le serveur vers lequel la requête est destinée est un serveur de résolution comprenant des requêtes chiffrées, c'est-à-dire un serveur de résolution supportant des protocoles sécurisés tel que le protocole DNS over HTTPS. Si le serveur de résolution comprend les requêtes chiffrées, il répond au dispositif d'interface en réponse à la requête de test.

Le dispositif d'interface recevant une réponse du serveur de résolution, il identifie le serveur comme étant un serveur non autorisé. Ce serveur peut être inclus dans une liste dite de serveurs non autorisés, cette liste pouvant être existante préalablement ou être créée avec l'inclusion du serveur identifié.

Selon une caractéristique, la requête de test est générée par le dispositif d'interface.

Selon une caractéristique, le procédé de traitement comporte en outre :
- la réception, en provenance du terminal de l'utilisateur, d'une requête de résolution non chiffrée comportant une chaine de caractères prédéfinie ; et
- l'émission vers le terminal de l'utilisateur d'une réponse représentative d'une erreur indiquant au terminal de l'utilisateur de ne pas générer des requêtes chiffrées,
la réception d'une seconde requête destinée à être émise vers un serveur associé au dispositif d'interface étant mise en œuvre à la suite de l'émission de ladite réponse représentative d'une erreur.

Par exemple, la chaine de caractères prédéfinie est «*use-application-dns.net* ».

Le message d'erreur indique au terminal de l'utilisateur qu'il ne faut pas chiffrer les requêtes de résolution et qu'il ne faut pas envoyer des requêtes de résolution chiffrées vers des serveurs non autorisés. Autrement dit, le terminal de l'utilisateur est informé par le message du dispositif d'utilisateur de la nécessité d'utiliser le mécanisme de résolution non chiffrée (résolution DNS) et de ne pas envoyer des requêtes de résolution chiffrées vers des serveurs non autorisés.

Grâce à ces caractéristiques du procédé, la possibilité pour le terminal d'utilisateur de générer des requêtes chiffrées vers des serveurs non autorisés par le fournisseur d'accès au réseau de communication est désactivée. Autrement dit, une fois que le terminal de l'utilisateur reçoit cette réponse provenant du dispositif d'interface, les requêtes générées (telle la seconde requête) sont destinées à être adressées à un serveur associé au dispositif d'interface, ces requêtes de résolution étant non chiffrées.

Selon des modes de réalisation, la seconde requête peut être transmise non chiffrée vers le serveur associé au dispositif d'interface ou elle peut être chiffrée avant d'être envoyée vers le serveur associé au dispositif d'interface.

Selon un mode de réalisation, lorsque la requête reçue est détectée comme étant destinée à être transmise vers un serveur non autorisé par le dispositif d'interface, le procédé comporte le blocage de la transmission de ladite requête reçue, ladite réception d'une seconde requête étant mise en œuvre à la suite de la mise en œuvre dudit blocage de la transmission de ladite requête reçue.

Autrement dit, le blocage de l'émission de la requête reçue déclenche la génération (par le terminal de l'utilisateur) d'une seconde requête, cette requête étant destinée à un serveur associé au dispositif d'interface, c'est-à-dire à un serveur autorisé.

Selon un autre mode de réalisation, lorsque la requête reçue est détectée comme étant destinée à être transmise vers un serveur non autorisé par le dispositif d'interface, ledit procédé comporte la configuration du terminal de l'utilisateur de sorte que la seconde requête reçue est destinée à être transmise vers ledit serveur associé au dispositif d'interface.

Ainsi, en cas de détection d'une requête destiné à un serveur non autorisé, la transmission de la requête est bloquée et le terminal de l'utilisateur, en particulier le navigateur installé sur le terminal d'utilisateur est configuré pour générer des requêtes vers un serveur de résolution associé au dispositif d'interface. Les requêtes générées ultérieurement par le terminal de l'utilisateur sont ainsi générées vers le serveur associé au dispositif d'interface.

Selon une caractéristique, le procédé de traitement comporte en outre la génération d'un message d'erreur destiné au terminal de l'utilisateur lui informant de la détection d'une requête destinée à être transmise à un serveur non autorisé par le fournisseur d'accès à Internet.

Ainsi, l'utilisateur est informé de ce que son terminal, en particulier le navigateur installé sur le terminal, essaie d'accéder à des serveurs non autorisés par son fournisseur d'accès au réseau de communication tel qu'Internet.

Selon une caractéristique, la seconde requête est chiffrée par le dispositif d'utilisateur.

Selon un autre mode de réalisation la seconde requête n'est pas chiffrée par le dispositif d'utilisateur. Elle peut être ensuite chiffrée par le dispositif d'interface avant émission.

Ainsi, la seconde requête peut être adressée au serveur associé au dispositif d'interface en utilisant une connexion sécurisé ou non sécurisé.

Selon une caractéristique, la troisième requête générée à partir de ladite seconde requête est destinée à un serveur de résolution parmi un sous-groupe prédéfini de serveurs associés au dispositif d'interface ou correspond à la seconde requête chiffrée.

Ainsi, le choix de serveurs auxquels la seconde requête peut être adressée est restreint.

Grâce à ces caractéristiques la sécurité des connexions au réseau de communication est augmentée, en mettant en œuvre des filtres tels que des filtres de type « contrôle parental ».

L'invention concerne selon un deuxième aspect, un dispositif d'interface permettant l'accès d'un terminal d'un utilisateur à un réseau de communication.

Selon l'invention, le dispositif d'interface comporte les moyens suivants pour traiter des requêtes émises par ledit terminal de l'utilisateur :
- un module de réception configuré pour recevoir une première requête reçue en provenance du terminal de l'utilisateur :
- un module de détection configuré pour détecter si la requête reçue est destinée à être transmise vers un serveur non autorisé par le fournisseur d'accès ;
- un module de blocage configuré pour bloquer la transmission de la première requête reçue lorsque la première requête reçue est détectée comme
   étant destinée à être transmise vers un serveur non autorisé par ledit dispositif d'interface ;
- un module de configuration configuré pour configurer le terminal de l'utilisateur de sorte qu'une seconde requête soit émise par le terminal de l'utilisateur, destinée à être transmise vers un serveur de résolution associé audit dispositif d'interface, lorsque la première requête reçue est détectée comme étant destinée à être transmise vers un serveur non autorisé ; et
- un module de transmission configuré pour transmettre vers un serveur de résolution associé audit dispositif interface, une seconde requête reçue en provenance du terminal de l'utilisateur par ledit module de réception ou une troisième requête générée par le dispositif d'interface à partir de la seconde requête, ladite seconde requête étant destinée à être émise vers ledit serveur de résolution associé audit dispositif d'interface.

Le dispositif d'interface a au moins un serveur de résolution associé vers lequel sont adressées les requêtes de résolution du terminal de l'utilisateur. Lorsque le dispositif d'interface détecte qu'une requête reçue en provenance du terminal, est destinée à être envoyée vers un serveur de résolution qui n'est pas autorisé par le fournisseur d'accès au réseau de communication. Le dispositif d'interface est configuré pour détecter si une requête de résolution est destinée à être transmise vers un serveur différent dudit au moins un serveur associé.

Selon des modes de réalisation, le dispositif d'interface est configuré en outre pour générer une troisième requête à partir de la seconde requête reçue. Cette troisième requête peut être générée en appliquant des filtres sur la seconde requête ou en chiffrant la seconde requête.

Selon une caractéristique, le dispositif d'interface comporte le serveur de résolution associé.

L'invention concerne selon un troisième aspect, un système de traitement de requêtes comportant un terminal d'un utilisateur configuré pour accéder à un réseau de communication et un dispositif d'interface conforme à l'invention, permettant l'accès du terminal de l'utilisateur au réseau de communication.

L'invention concerne selon un quatrième aspect, un programme d'ordinateur comprenant une séquence d'instructions pour la mise en œuvre du procédé de traitement conforme à l'invention, lorsqu'il est chargé et exécuté par un processeur.

L'invention concerne selon un cinquième aspect, un support d'informations lisible par un ordinateur, sur lequel est enregistré un programme d'ordinateur comprenant une séquence d'instructions pour la mise en œuvre du procédé de traitement conforme à l'invention, lorsqu'il est chargé dans et exécuté par un processeur
Le dispositif d'interface, le système de traitement de requêtes, le programme d'ordinateur et le support d'informations présentent des caractéristiques et avantages analogues à ceux décrits précédemment en relation avec le procédé de traitement.

D'autres particularités et avantages de l'invention apparaîtront encore dans la description ci-après.

Aux dessins annexés, donnés à titre d'exemples non limitatifs :
- la figure 1 représente un schéma illustrant le contexte de l'invention,
- la figure 2 illustre des étapes d'un procédé de traitement des requêtes conforme à un premier mode de réalisation de l'invention,
- la figure 3 illustre des étapes d'un procédé de traitement des requêtes conforme à un deuxième mode de réalisation de l'invention,
- la figure 4 illustre des étapes d'un procédé de traitement des requêtes conforme à un troisième mode de réalisation de l'invention
- la figure 5 illustre une architecture matérielle pouvant mettre en œuvre le procédé de traitement conforme à l'invention, et
- la figure 6 illustre des échanges entre des entités du système selon un mode de réalisation de l'invention.

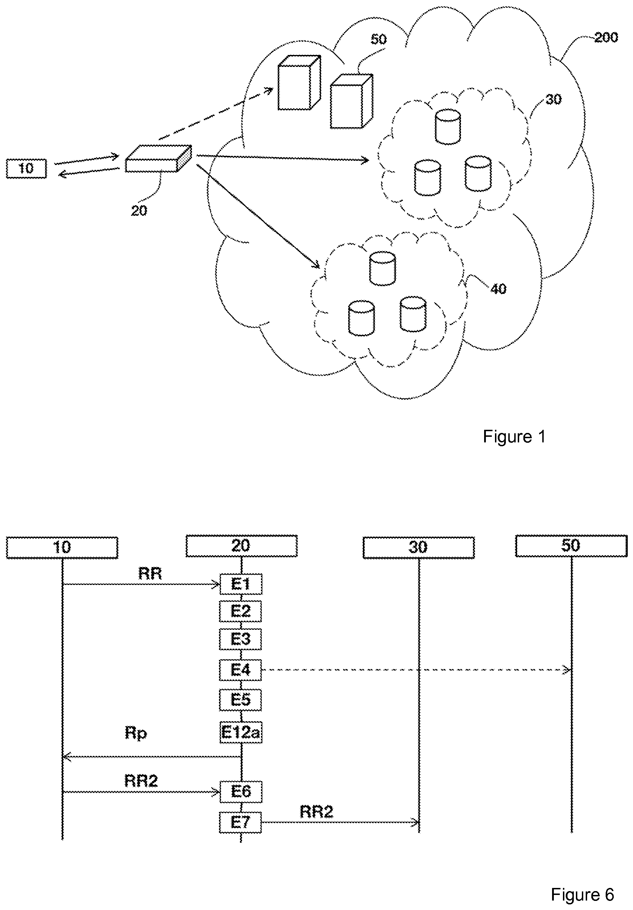

La **figure 1** représente un dispositif d'un utilisateur 10 pouvant accéder à un réseau de communication 200 via un dispositif d'interface 20. Le réseau de communication 200 peut être Internet et le dispositif d'interface 20 peut être une passerelle domestique ou un routeur permettant l'accès du terminal d'un utilisateur 10 à Internet. L'accès au réseau de communication est fourni par un fournisseur d'accès au réseau de communication.

Le terminal de l'utilisateur 10 peut être tout type de dispositif configuré pour accéder à un réseau de communication tel qu'Internet via la passerelle domestique 20. Le terminal 10 peut être un téléphone portable ou autre terminal de communication mobile, tel qu'une tablette ou un ordinateur portable, un ordinateur de bureau ou un appareil domestique pouvant établir une connexion avec le réseau de communication 200.

Lorsqu'un utilisateur renseigne un nom de domaine sur le navigateur installé sur son terminal 10, une requête de résolution de nom de domaine est émise par le terminal vers un serveur de résolution ou serveur DNS 30, 40, 50. Le serveur DNS répond au terminal 10 avec une adresse réseau ou adresse de type « Internet Protocol » correspondant au nom de domaine, le terminal 10 pouvant ensuite accéder à l'adresse IP via la passerelle domestique 20.

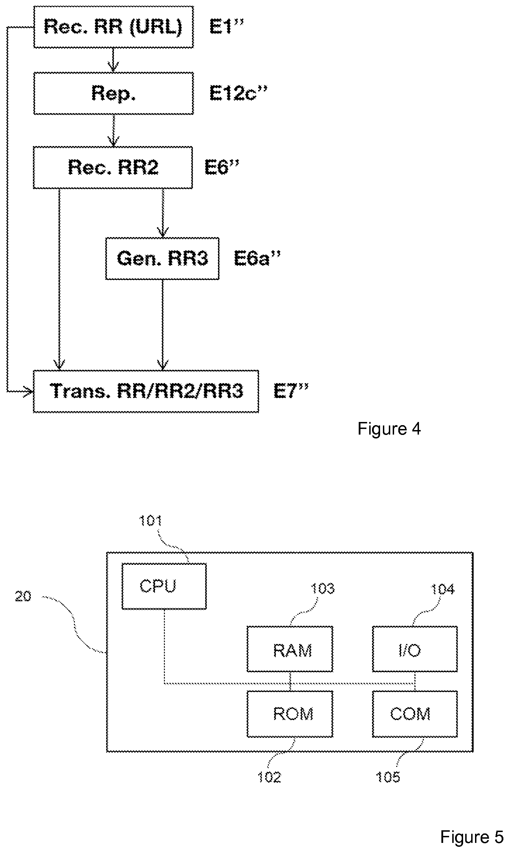

La passerelle domestique 20 est un dispositif d'interface permettant les échanges entre le terminal de l'utilisateur 10 et le réseau de communication 200. Elle se charge entre autre, d'adresser les requêtes de résolution RR vers des serveurs de résolution 30, 40, 50. Une architecture possible du dispositif d'interface sera décrite ultérieurement en référence à la figure 4.

En général, les requêtes de résolution sont adressées vers des serveurs de résolution locaux 30 appartenant au fournisseur d'accès au réseau de communication ou vers des serveurs de résolution 40 n'appartenant pas au fournisseur d'accès au réseau de communication mais étant considérés par le fournisseur d'accès au réseau de communication comme étant de confiance. On considère qu'un serveur associé au dispositif d'interface 20 est soit un serveur de résolution local 30 soit un serveur de confiance 40.

En outre, comme indiqué ci-dessus, parfois les requêtes de résolution sont adressées vers des serveurs de résolution externes 50 auxquels le fournisseur d'accès au réseau de communication n'a pas d'accès, ces serveurs supportant des protocoles sécurisés tel que le DoH.

Le dispositif d'interface 20 est configuré pour déterminer si un serveur de résolution est autorisé ou pas autorisé par le fournisseur d'accès au réseau de communication auquel il permet l'accès. En outre, le terminal de l'utilisateur 10 est configuré au moins pour générer des requêtes vers au moins un serveur de résolution 30, 40 associé au dispositif d'interface 20.

Grâce au procédé de traitement proposé par l'invention, l'envoi des requêtes chiffrées vers des serveurs externes 50 est détecté puis traité. Ce procédé de traitement est décrit ci-dessous.

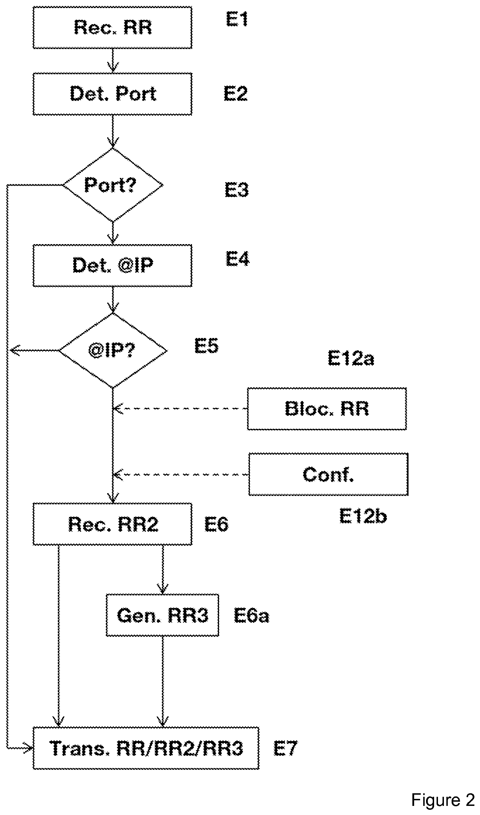

La **figure 2** illustre un organigramme du procédé de traitement conforme à un premier mode de réalisation de l'invention.

Lorsque l'utilisateur souhaite accéder au réseau de communication 200 via le dispositif d'interface 20, son terminal 10 génère une requête de résolution du nom de domaine RR, dite première requête, où il veut accéder et l'envoie au dispositif d'interface 20.

Selon un mode de réalisation, tel que celui représenté à la figure 2, lorsque le dispositif d'interface 20 reçoit E1 en provenance du terminal de l'utilisateur 10, une requête (première requête), telle qu'une requête de résolution, il détermine E2 à partir de la requête RR reçue, le port de destination de ladite requête RR.

L'identification du port de destination de la requête donne une indication du protocole utilisé pour la résolution du domaine et permet de déterminer si la connexion qui va être établie avec le serveur de résolution 30, 40, 50, sera une connexion sécurisée ou pas. Ainsi, l'identification du port de destination permet de déterminer si la requête de résolution adressée au serveur de résolution 20, 30, 40 est chiffrée ou pas.

Par exemple, si le port de destination utilisé dans la requête est le port 443, la requête est chiffrée et la connexion qui va être établie avec le serveur de résolution 30, 40, 50 sera sécurisée.

On notera que si le serveur avec lequel le terminal de l'utilisateur 10 va établir une connexion est un serveur de confiance 30, 40, l'utilisation d'une connexion sécurisée vers le port logiciel 443 est avantageuse. Néanmoins, ce port logiciel peut être employé aussi pour adresser des requêtes chiffrées vers des serveurs 50 qui ne sont pas de confiance.

Ainsi, selon un mode de réalisation, il est vérifié E3 si le port déterminé correspond à un port permettant d'établir une connexion sécurisée. Lorsque ledit port déterminé correspond à un port permettant d'établir une connexion sécurisée, le procédé de traitement comporte la détermination E4 d'une adresse réseau représentative du serveur 30, 40, 50 vers lequel la requête RR est destinée. La détermination E4 de cette adresse réseau est mise en œuvre à partir de la requête RR reçue.

Ensuite, l'adresse réseau déterminée est vérifiée E5 pour déterminer si elle correspond à un serveur 30, 40, 50 autorisé ou non autorisé.

Selon des modes de réalisation, un serveur non autorisé peut être un serveur différent des serveurs de résolution associés 30 au dispositif d'interface 20 et/ou un serveur 50 faisant partie d'une liste dite de serveurs non autorisés par le fournisseur d'accès audit réseau de communication 200.

Par conséquent, l'étape de vérification E5 peut être mise en œuvre selon différents modes de réalisation.

Selon un mode de réalisation, le dispositif d'interface 20 a un ensemble de serveurs 20, 30 associés, l'accès à ces serveurs associés étant autorisé. Ainsi, le dispositif d'interface 20 comporte un module de stockage où une liste dite de serveurs associés 20, 30 ou de serveurs autorisés 20, 30.

La liste de serveurs associés 20, 30 comprend les adresses réseau des serveurs 30 appartenant au fournisseur d'accès au réseau de communication. En outre, elle peut comprendre des serveurs n'appartenant pas au fournisseur d'accès au réseau de communication mais étant de serveurs de confiance 40. Ce type de liste est connu comme « liste blanche » ou « whitelist » de serveurs.

Dans ce mode de réalisation, lors de la vérification E5 de l'adresse réseau, il est vérifié si l'adresse appartient à cette liste de serveurs associés.

Si l'adresse appartient à la liste de serveurs associés, la requête reçue est transmise E7 au serveur de résolution 30, 40.

Si lors de la vérification E5 de l'adresse réseau, il est déterminé que l'adresse n'appartient pas à la liste de serveurs associés, le dispositif d'interface ne transmet pas la requête au serveur de résolution 50.

On notera que le port de destination identifié dans la requête étant un port permettant d'établir une connexion sécurisée, et que l'adresse réseau du serveur de résolution étant un serveur n'étant pas dans la liste de serveurs associés 30, 40, il est déterminé que la requête est chiffrée et qu'elle est destinée à être transmise vers un serveur non autorisé 50 par le fournisseur d'accès au réseau de communication 200.

Selon un second mode de réalisation, le dispositif d'interface 20 stocke une liste dite de serveurs non autorisés 50.

Cette liste de serveurs comprend des adresses réseau de serveurs non autorisés 50. Typiquement, ces serveurs sont des serveurs supportant des protocoles sécurisés tel que le protocole DoH, n'appartenant pas au fournisseur d'accès au réseau de communication et n'étant pas un des serveurs considérés comme étant de serveurs de confiance par le fournisseur d'accès au réseau de communication. Ce type de liste est connu comme « liste noire » ou « blacklist » de serveurs.

Dans ce mode de réalisation, lors de la vérification E5 de l'adresse réseau, il est vérifié si l'adresse appartient à cette liste noire de serveurs.

Si l'adresse n'appartient pas à la liste noire de serveurs, la requête reçue est transmise E7 au serveur de résolution 30, 40. On notera, qu'il est déduit que si le serveur n'est pas répertorié dans la « liste noire » de serveurs, le serveur est soit un serveur appartenant au fournisseur d'accès ou étant considéré comme de confiance par le fournisseur d'accès. Autrement dit, il peut être considéré que le serveur est un serveur associé au dispositif d'interface 20.

Si lors de la vérification E5 de l'adresse réseau, il est déterminé que l'adresse réseau appartient à la liste noire de serveurs, le dispositif d'interface ne transmet pas la requête au serveur de résolution 50.

On notera que du fait que le port de destination identifié dans la requête est un port permettant d'établir une connexion sécurisée, il est soupçonné que le terminal de l'utilisateur 10 va établir une connexion avec un serveur non autorisé 50. Le soupçon est confirmé du fait de l'identification de l'adresse réseau dans la liste noire de serveurs.

Selon un troisième mode de réalisation, lors de la vérification E5, la liste blanche de serveurs et la liste noire de serveurs peuvent être utilisées. Par exemple, si l'adresse réseau ne correspond à aucun serveur de la liste blanche de serveurs, il est vérifié si elle correspond à un des serveurs de la liste noire de serveurs, et vice-versa.

Lorsqu'à l'issue de l'étape de vérification E5, une requête RR reçue E1 en provenance du terminal de l'utilisateur 10 est détectée comme étant destinée à être transmise vers un serveur non autorisé 50 par un fournisseur d'accès audit réseau de communication 200, le terminal de l"utilisateur 10 génère une seconde requête RR2, cette seconde requête étant destinée à être émise vers un serveur de résolution associé 30 au dispositif d'interface 20.

On notera qu'une requête RR destinée à être transmise vers un serveur non autorisé 50 peut être générée par le navigateur installé dans le terminal de l'utilisateur 10. Ce navigateur peut être configuré par le fournisseur du navigateur pour qu'il utilise un serveur fonctionnant selon le protocole DoH appartenant au fournisseur du navigateur.

La deuxième requête RR2 générée est destinée à un serveur 30 associé au dispositif d'interface 20, tel qu'un serveur DNS fourni par le dispositif d'interface 20 à l'utilisateur lors des échanges DHCP. Selon un mode de réalisation, une fois que la seconde requête RR2 est reçue E6 par le dispositif d'interface 10, la seconde requête RR2 est transmise vers un serveur de résolution 30 associé au dispositif d'interface 20.

Selon d'autres modes de réalisation, une troisième requête RR3 est générée E6a par le dispositif d'interface à partir de la deuxième requête RR2.

Par exemple, si la seconde requête RR2 n'est pas chiffrée, des opérations de chiffrement peuvent être appliquées sur la seconde requête lors de sa génération E6a. La troisième requête RR3 correspond ainsi à la seconde requête RR2 chiffrée.

Selon un autre exemple, des filtres peuvent être appliqués sur la seconde requête RR2, le filtrage permettant de protéger la vie privée de l'utilisateur ou d'appliquer des filtres du type contrôle parental. La troisième requête RR3 est ensuite transmise vers un serveur de résolution 30 associé audit dispositif interface 20.

Les filtres permettant de protéger la vie privée et le contrôle parental sont connus de l'homme du métier et ne nécessitent pas d'être décrits ici.

Le déclenchement de la génération de la seconde requête RR2 par le terminal de l'utilisateur sera décrit ultérieurement.

Selon des modes de réalisation, la seconde requête RR2 peut être chiffrée ou non chiffrée, autrement dit adressée au serveur associé au dispositif d'interface 20 en utilisant une connexion sécurisée ou non sécurisée respectivement.

Pour cela, le terminal de l'utilisateur 10 et/ou le dispositif d'interface 20 peuvent être configurés pour permettre des connexions chiffrées ou non chiffrées.

Selon un mode de réalisation, la seconde requête peut être destinée à un serveur de résolution parmi un sous-groupe de serveurs 30, 40 associés au dispositif d'interface 20.

Ceci permet d'augmenter la sécurité des connexions au réseau de communication 200 en mettant en œuvre des filtres tel que des filtres de type « contrôle parental ».

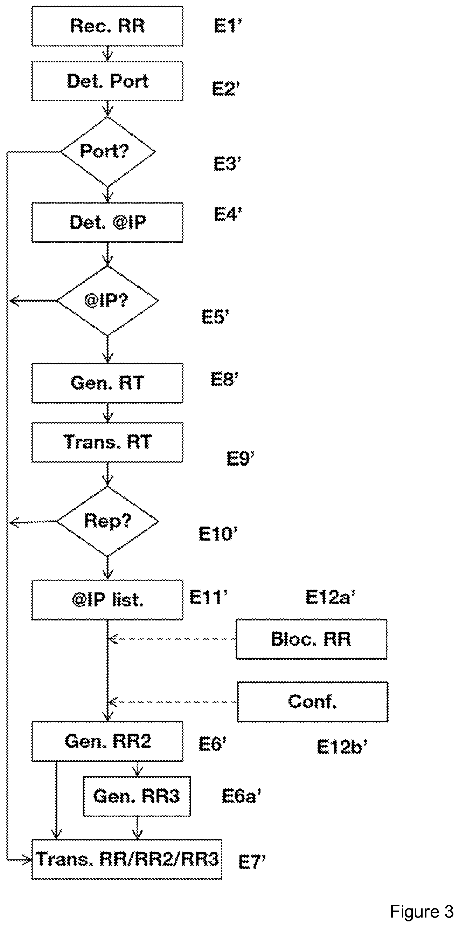

La **figure 3** illustre un organigramme du procédé de traitement conforme à l'invention selon un deuxième mode de réalisation.

Les étapes E1' à E5' sont similaires aux étapes E1 à E5 respectivement décrites en référence à la figure 1.

Dans le mode de réalisation illustré à la figure 3, lorsqu'il est détecté que la requête reçue par le dispositif d'interface 20 est destinée à être transmise via un port permettant d'établir une connexion sécurisée, tel que le port logiciel 443, et que l'adresse réseau contenue dans la requête est représentative d'un serveur non autorisé, le dispositif d'interface 20 génère E8' une requête de test RT destinée à être émise vers le serveur correspondant à l'adresse réseau déterminée E4'. Cette requête de test RT est chiffrée et est seulement comprise par des serveurs supportant des protocoles sécurisés tel que le protocole DoH.

On notera que, comme pour le mode de réalisation décrit en référence à la figure 2, la vérification de l'adresse réseau E5' pour déterminer si elle correspond à un serveur non autorisé, peut être mise en œuvre selon les différents modes de réalisation décrits ci-dessous.

Dans le mode de réalisation décrit à présent, la requête de test RT générée est transmise E9' vers le port sécurisé déterminé E2' préalablement, vers le serveur représenté par l'adresse réseau préalablement déterminé E4'.

La requête de test étant chiffrée, le serveur recevant la requête de test RT comprend cette requête RT seulement s'il supporte un protocole sécurisé. Si le serveur comprend la requête, il répond au dispositif d'interface 20.

On notera que, comme il est connu de l'homme du métier, le choix des paramètres de chiffrement des requêtes est mis en œuvre selon le protocole standard TLS (Pour « Transport Layer Security »), ce protocole définissant comment un dispositif client (terminal de l'utilisateur) et un serveur doivent se synchroniser sur le choix d'un algorithme de chiffrement compris par les deux parties. Ensuite, dans ce canal chiffré, le dispositif d'interface 20 envoie une requête générée selon un protocole sécurisé tel que le protocole DoH pour résoudre un nom de domaine, par exemple « orange.fr ».

Le dispositif d'interface 20 recevant E10' une réponse du serveur, identifie E11' le serveur comme étant un serveur non autorisé.

Ainsi, le dispositif d'interface 10 inclut le serveur, en particulier l'adresse réseau représentative du serveur identifié, dans une liste de serveurs non autorisés. Dans un mode de réalisation, cette liste de serveurs non autorisés ou liste noire de serveurs existe préalablement (par exemple elle est stockée dans le dispositif d'interface), l'adresse réseau du serveur identifié étant ajoutée à la liste. Dans un autre mode de réalisation, la liste de serveurs non autorisés n'existe pas. Ainsi, la liste noire de serveurs est créée à la suite de l'identification de ce serveur.

Ainsi, à chaque fois que le terminal de l'utilisateur 10 essaie d'accéder à un serveur non autorisé 50, le serveur non autorisé est identifié et répertorié dans une liste noire. Par conséquent, les requêtes générées ultérieurement destinées à être transmises vers ce serveur 50, sont détectées rapidement. Cette phase (E8' à E11') est considérée comme étant une phase d'apprentissage.

Ensuite, selon un mode de réalisation, le terminal de l'utilisateur 10 génère une seconde requête RR2, cette seconde requête étant destinée à être émise vers un serveur de résolution associé 30 au dispositif d'interface 20. Une fois que la seconde requête RR2 est reçue E6' par le dispositif d'interface 10, la seconde requête RR2 peut être transmise E7' vers un serveur de résolution 30 associé au dispositif interface 20 ou comme indiqué ci-dessous pour un autre mode de réalisation, divers filtrages peuvent être mis en œuvre, une troisième requête RR3 étant générée E6a' à partir de la deuxième requête RR2. Dans ce cas, la troisième requête est transmise E7' vers le serveur de résolution 30 associé au dispositif d'interface 20.

La génération E6, E6' d'une seconde requête RR2 par le terminal de l'utilisateur 10 peut être déclenchée selon différents modes de réalisation.

Selon un premier mode de réalisation, lorsqu'une requête reçue E1, E1' en provenance du terminal de l'utilisateur 10 est détectée comme étant destinée à être transmise ver un serveur non autorisé (non à E5 ou E5'), sa transmission est bloquée E12a, E12a' par le dispositif d'interface 20.

Selon un mode de réalisation, le dispositif de l'utilisateur 10 peut être notifié, via un autre canal de communication que celui établi avec le dispositif d'interface, du blocage de la requête par le dispositif d'interface 20.

Selon un autre mode de réalisation, le dispositif de l'utilisateur 10 comprend que la requête a été bloquée par le dispositif d'interface 20 si après une période de temps il n'a pas reçu de réponse provenant du serveur de résolution, c'est-à-dire si le nom de domaine n'a pas été résolu.

A titre d'exemple nullement limitatif la période de temps est de l'ordre de 30 secondes.

La génération de la seconde requête RR2 est mise en œuvre à la suite de la mise en œuvre du blocage E12a, E12a' de la transmission de la requête reçue.

Selon un second mode de réalisation, lorsqu'une requête reçue E1, E1' en provenance du terminal de l'utilisateur 10 est détectée comme étant destinée à être transmise vers un serveur non autorisé (réponse « non » à E5 ou E5'), le terminal de l'utilisateur est configuré de sorte que lorsque la seconde requête est générée, elle est destinée à transmise vers un serveur 30 associé au dispositif d'interface. Ainsi, l'adresse réseau du serveur 30 associé au dispositif d'interface est contenue dans la seconde requête générée.

Dans un mode de réalisation, le terminal de l'utilisateur 10 est configuré au moyen d'un protocole de configuration tel que le protocole DHCP (pour « Dynamic Host Configuration Protocol »). Ce type de protocole permet la configuration des paramètres réseau du terminal de l'utilisateur, notamment l'attribution de l'adresse réseau du serveur auquel sont adressées les requêtes générées pour établissement d'une connexion avec le réseau de communication.

Ce type de configuration est connu de l'homme du métier et ne nécessite pas d'être décrite plus en détail ici.

On notera que les requêtes générées ultérieurement à la configuration E12b, E12b' seront destinées à être transmises vers le serveur 30 associé au dispositif d'interface 20. Pour cela, l'adresse réseau du serveur sera contenue dans les requêtes générées ultérieurement.

Selon un mode de réalisation, lorsqu'une requête destinée à être transmise à un serveur non autorisé par le fournisseur d'accès à Internet est détectée (à l'issue de E5, E5'), un message d'erreur destiné au terminal de l'utilisateur 10 est généré, ce message d'erreur informant l'utilisateur de ladite détection. L'utilisateur est ainsi averti que le navigateur qu'il utilise tente d'accéder à un serveur non autorisé par son fournisseur d'accès au réseau de communication.

Selon un mode de réalisation, l'utilisateur est averti de ladite détection via d'autres terminaux lui appartenant. Ainsi, si un tiers utilise un terminal de l'utilisateur et qu'il tente d'accéder à un serveur non autorisé, l'utilisateur est mis au courant.

La figure 4 illustre des étapes d'un troisième mode de réalisation de l'invention.

Dans ce mode de réalisation, le dispositif d'interface reçoit E1" une requête en provenance du terminal de l'utilisateur 10, cette requête étant une requête de résolution non chiffrée comportant une chaine de caractères prédéfinie.

Par exemple, la chaine de caractères prédéfinie permet d'identifier une ressource telle que «*use-application-dns.net* ». La chaine de caractères prédéfinie est connue comme URL (pour « Uniform Resource Locator »).

Le dispositif d'interface détectant E1a" cette chaine de caractères prédéfinie, émet E12c" vers le terminal de l'utilisateur 10 une réponse représentative d'une erreur.

Par cette réponse représentative d'une erreur le dispositif d'interface 20 demande au terminal de l'utilisateur 10 de ne pas chiffrer les requêtes de résolution et de ne pas envoyer des requêtes de résolution chiffrées vers des serveurs non autorisés 50.

Autrement dit, le terminal de l'utilisateur 10 est informé par le message du dispositif d'utilisateur 20 de la nécessité d'utiliser le mécanisme de résolution non chiffrée (résolution DNS) et de ne pas envoyer des requêtes de résolution chiffrées vers de serveurs non autorisés 50.

Le terminal d'utilisateur 10 recevant ce message du dispositif d'interface 20, génère E6", comme dans les modes de réalisation précédant, une seconde requête RR2 destinée à être émise vers un serveur associé 30, 40 au dispositif d'interface 20.

Grâce à ces caractéristiques, la possibilité pour le terminal d'utilisateur 10 de générer des requêtes chiffrées vers des serveurs non autorisés 50 par le fournisseur d'accès au réseau de communication 200 est désactivée. Autrement dit, une fois que le terminal de l'utilisateur 10 reçoit cette réponse provenant du dispositif d'interface 20, les requêtes générées (telle la seconde requête RR2) sont destinées à être adressées à un serveur associé 30, 40 au dispositif d'interface 20, ces requêtes de résolution étant non chiffrées.

Ensuite, selon des modes de réalisation, la seconde requête RR2 peut être transmise E7" non chiffrée vers le serveur 30, 40 associé au dispositif d'interface 20 ou elle peut être chiffrée ou filtré E6a" avant d'être envoyée E7" vers le serveur 30, 40 associé au dispositif d'interface 20.

La **figure 5** illustre schématiquement une architecture matérielle d'un dispositif d'interface 20 pouvant mettre en œuvre le procédé de traitement conforme à l'invention.

Le dispositif d'interface 20 comprend un bus de communication 100 auquel sont reliées :
- une unité de traitement 101, nommée sur la figure CPU (pour « Central Processing Unit ») et pouvant comporter un ou plusieurs processeurs ;
- une mémoire non volatile 102, par exemple ROM (pour « Read Only Memory »), EEPROM (pour « Electrically Erasable Read Only Memory ») ou une mémoire Flash;
- une mémoire vive 103 ou RAM (pour « Random Access Memory ») ;
- une interface 104 d'entrée/sortie, nommée sur la figure I/O (pour « Input/Output »), par exemple des touches ou boutons, un écran, un clavier, une souris ou un autre dispositif de pointage tel qu'un écran tactile ou une télécommande permettant à un utilisateur d'interagir avec dispositif d'interface 20 via une interface graphique ou interface homme-machine ; et
- une interface de communication 105, nommée COM sur la figure, adaptée à échanger des données par exemple avec un serveur via un réseau 200.

La mémoire vive 103 comprend des registres adaptés à l'enregistrement des variables et paramètres créés et modifiés au cours de l'exécution d'un programme informatique comprenant des instructions pour la mise en œuvre du procédé de traitement selon l'invention. Les codes d'instructions du programme stocké en mémoire non-volatile 102 sont chargés en mémoire RAM 103 en vue d'être exécutés par l'unité de traitement CPU 101.

La mémoire non-volatile 102 est par exemple une mémoire réinscriptible de type EEPROM ou mémoire Flash pouvant constituer un support au sens de l'invention, c'est-à-dire pouvant comprendre un programme informatique comprenant des instructions pour la mise en œuvre du procédé de traitement selon l'invention. La mémoire réinscriptible peut comprendre en outre une liste dite de serveurs autorisés (liste blanche de serveurs) et/ou une liste dite de serveurs non autorisés (liste noire de serveurs).

Ce programme définit, par le biais de ses instructions, des modules fonctionnels du dispositif d'interface 20 qui sont mis en œuvre et/ou commandent les éléments matériels décrits précédemment. Ces modules comprennent notamment les modules suivants pour traiter des requêtes émises par le terminal de l'utilisateur 10 :
- un module de réception configuré pour recevoir une requête RR reçue en provenance du terminal de l'utilisateur 10 ;
- un module de détection configuré pour détecter que si la requête RR reçue est destinée à être transmise vers un serveur non autorisé 50 par le fournisseur d'accès au réseau de communication 200 ; et
- un module de transmission configuré pour transmettre vers un serveur de résolution associé 30 au dispositif interface 20, une seconde requête RR2 reçue par ledit module de réception, la seconde requête RR2 étant destinée à être émise vers ledit serveur de résolution associé 30 au dispositif d'interface 20.

Le dispositif d'interface 20 peut comprendre en outre, en fonction de modes de réalisation :
- un module de détermination pour déterminer à partir de la requête reçue, d'une adresse réseau représentative du serveur vers lequel la requête est destinée ;
- un module de vérification pour déterminer si l'adresse déterminée correspond à un serveur non autorisé ;
- un deuxième module de détermination pour déterminer à partir de la requête reçue, un port du dispositif d'interface désigné pour l'émission de la requête reçue,
- un module de génération pour générer une requête de test chiffrée destinée à être émise vers le serveur correspondant à l'adresse réseau déterminée ;
- un module d'émission pour émettre une requête vers le port déterminé;
- un module d'identification pour identifier un serveur comme étant un serveur non autorisé ;
- un module de blocage pour bloquer la transmission des requêtes, notamment de la requête reçue en provenance du terminal de l'utilisateur ;
- un module de configuration pour configurer le terminal de l'utilisateur de sorte que les requêtes, en particulier la seconde requête générée soit destinée à être transmise vers le serveur associé au dispositif d'interface ; et
- un module de génération pour générer un message d'erreur destiné au terminal de l'utilisateur l'informant de la détection d'une requête destinée à être transmise à un serveur non autorisé par le fournisseur d'accès à Internet.

Selon des modes de réalisation, le dispositif d'interface 20 peut comporter un module de filtrage et/ou chiffrage pour générer des requêtes à partir des requêtes reçues en provenance du terminal de l'utilisateur 10.

Les modules et moyens précités sont pilotés par le processeur de l'unité de traitement 101. Ils peuvent prendre la forme d'un programme exécutable par un processeur, ou une forme matérielle (ou « hardware »), telle un circuit intégré spécialisé (connu en terminologie anglo-saxonne connu comme ASIC pour « Application-Specific Integrated Circuit »), un système sur puce (connu en terminologie anglo-saxonne comme SoC pour « System On Chip »), ou un composant électronique de type circuit logique programmable, tel qu'un composant de type FPGA (pour « Field-Programmable Gate Array »).

Le terminal de l'utilisateur 10 comprend également un bus de communication auquel sont reliées une unité de traitement ou microprocesseur, une mémoire non volatile, une mémoire vive ou RAM, et une interface de communication adaptée notamment à échanger des données avec le dispositif d'interface 20.

La **figure 6** illustre un exemple d'échanges entre le terminal de l'utilisateur 10, le dispositif d'interface 20 et des serveurs 30, 40,50 du réseau de communication 200 lorsque le procédé de traitement est mis en œuvre selon le mode de réalisation représenté à la figure 1.

Le terminal de l'utilisateur 10 adresse une requête de résolution RR au dispositif d'interface 20. Cette requête est par exemple générée selon le protocole DoH et est destinée à être adressée à l'adresse réseau (adresse IP) 8.8.8.8 vers le port 443 (pour sécuriser). A titre d'exemple nullement limitatif, cette requête peut prendre la forme suivante :

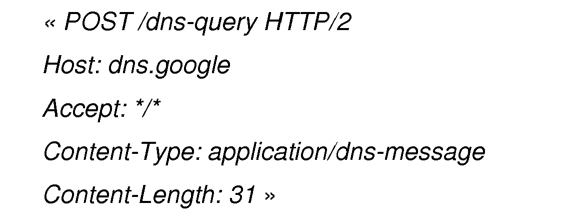

Lorsque la requête est reçue E1 par le dispositif d'interface 20, le port 443 est déterminé E2. Pour cela, le port de destination de la requête est extrait. Le port déterminé étant un port permettant d'établir une connexion sécurisée, l'adresse réseau est déterminée E4, c'est-à-dire, qu'elle est identifié et extraite de la requête. On notera que l'adresse réseau est introduite dans l'entête IP transmettant la requête.

Selon un mode de réalisation le dispositif d'interface 20 vérifie si l'adresse appartient à une liste noire de serveurs. Dans cet exemple, l'adresse réseau est répertoriée dans la liste noire. Par conséquent, le dispositif d'interface bloque E12a l'émission de la requête.

Ensuite, le terminal de l'utilisateur 10 génère une seconde requête RR2 et l'adresse au dispositif d'interface 20. Lorsque le dispositif d'interface 20 reçoit E6 la seconde requête RR2, il la transmet E7 au serveur 30 associé au dispositif d'interface 20.

Cet exemple est décrit à titre illustratif et nullement limitatif. Bien entendu, selon de différents modes de réalisation, les échanges entre les entités constituant le système décrits ci-dessus sont différents.

## Revendications

1. Procédé de traitement des requêtes de résolution de nom de domaine émises par un terminal d'un utilisateur (10), ledit procédé de traitement étant mis en œuvre par un dispositif d'interface (20) permettant l'accès du terminal de l'utilisateur (10) à un réseau de communication (200), ledit procédé de traitement, lorsqu'une première requête (RR) reçue (E1) est détectée (E2 à E5 ; E2' à E5') comme étant destinée à être transmise vers un serveur de résolution non autorisé (50) par ledit dispositif d'interface (20), comportant:
- le blocage (E12a ; E12a') de la transmission de ladite première requête (RR) reçue ;
- la configuration (E12b ; E12b') du terminal de l'utilisateur (10) de sorte qu'une seconde requête (RR2) est émise par le terminal de l'utilisateur (10), destinée à être transmise vers un serveur de résolution (30, 40) associé audit dispositif d'interface (20) ;
- la réception (E6 ; E6' ; E6") de la seconde requête (RR2) par le dispositif d'interface (20) à la suite de la mise en œuvre du blocage (E12a ; E12a') de la première requête (RR) reçue ; et
- la transmission (E7 ; E7' ; E7") vers ledit serveur de résolution (30, 40) associé audit dispositif d'interface (20), de ladite seconde requête (RR2) reçue ou d'une troisième requête (RR3) générée par le dispositif d'interface (20) à partir de ladite seconde requête (RR2) reçue.

2. Procédé conforme à la revendication 1, dans lequel un serveur non autorisé (50) est un serveur différent des serveurs de résolution (30, 40) associés audit dispositif d'interface (20) et/ou un serveur faisant partie d'une liste dite de serveurs non autorisés (50) par le fournisseur d'accès audit réseau de communication (200).

3. Procédé de traitement conforme à la revendication 1, **caractérisé en ce qu'**il comporte :
- la détermination (E4 ; E4') à partir de la première requête (RR) reçue, d'une adresse réseau représentative du serveur vers lequel la première requête (RR) est destinée ; et
- la vérification (E5 ; E5') de l'adresse réseau déterminée pour déterminer si l'adresse réseau déterminée correspond à un serveur non autorisé (50) par le dispositif d'interface.

4. Procédé de traitement conforme à la revendication 1, **caractérisé en ce qu'**il comporte la détermination (E3 ; E3') à partir de la première requête (RR) reçue d'un port du dispositif d'interface (20) désigné pour la destination de ladite requête reçue, si ledit port déterminé correspond à un port permettant d'établir une connexion sécurisée, ledit procédé comportant en outre :
- la détermination (E4 ; E4') à partir de la première requête (RR) reçue, d'une adresse réseau représentative du serveur vers lequel la première requête est destinée, et
- la vérification (E5 ; E5') de ladite adresse réseau déterminée pour déterminer si l'adresse réseau déterminée correspond à un serveur non autorisé (50) par le dispositif d'interface.

5. Procédé de traitement conforme à la revendication 4, **caractérisé en ce que** si ledit port déterminé correspond à un port permettant d'établir une connexion sécurisée et que le résultat de la vérification (E5 ; E5') de ladite adresse réseau est que ladite adresse ne correspond pas à un serveur (30, 40) associé au dispositif d'interface (20) ni à une adresse réseau d'un serveur dans la liste de serveurs non autorisés (50), ledit procédé de traitement comporte en outre :
- la génération (E8') d'une requête de test (RT) chiffrée destinée à être émise vers le serveur correspondant à l'adresse réseau déterminée ;
- l'émission (E9') de ladite requête de test (RT) vers ledit port déterminé; et
- si le dispositif d'interface (20) reçoit une réponse à la requête de test (RT) en provenance du serveur, l'identification (E11') dudit serveur (50) comme étant un serveur non autorisé.

6. Procédé de traitement conforme à la revendication 1, **caractérisé en ce qu'**il comporte en outre :
- la réception (E1"), en provenance du terminal de l'utilisateur (10), d'une requête de résolution non chiffrée comportant d'une chaine de caractères prédéfinie ; et
- l'émission (E12c") vers le terminal de l'utilisateur (10) d'une réponse représentative d'une erreur indiquant au terminal de l'utilisateur (10) de ne pas générer des requêtes chiffrées,
- la réception d'une seconde requête (RR2) destinée à être émise vers un serveur associé (30, 40) au dispositif d'interface (20) étant mise en œuvre à la suite de l'émission de ladite réponse représentative d'une erreur.

7. Procédé de traitement conforme à la revendication 1, **caractérisé en ce qu'**il comporte en outre la génération d'un message d'erreur destiné au terminal de l'utilisateur (10) l'informant de la détection d'une requête destinée à être transmise à un serveur non autorisé (50) par le fournisseur d'accès à Internet.

8. Procédé de traitement conforme à la revendication 1, **caractérisé en ce que** ladite seconde requête (RR2) est chiffrée par le dispositif d'utilisateur (10).

9. Procédé de traitement conforme à la revendication 1, **caractérisé en ce que** la troisième requête (RR3) générée à partir de ladite seconde requête (RR2) est destinée à un serveur de résolution parmi un sous-groupe prédéfini de serveurs (30, 40) associés au dispositif d'interface (20) ou correspond à la seconde requête (RR2) chiffrée.

10. Dispositif d'interface (20) permettant l'accès d'un terminal d'un utilisateur à un réseau de communication (200), ledit dispositif d'interface (20) comportant les modules suivants pour traiter des requêtes de résolution de nom de domaine émises par ledit terminal de l'utilisateur (10) :
- un module de réception configuré pour recevoir une première requête (RR) reçue ;
- un module de détection configuré pour détecter si la première requête (RR) reçue est destinée à être transmise vers un serveur de résolution non autorisé (50) par ledit dispositif d'interface ;
- un module de blocage configuré pour bloquer la transmission de la première requête (RR) reçue lorsque la première requête (RR) reçue (E1) est détectée (E2 à E5 ; E2' à E5') comme étant destinée à être transmise vers un serveur non autorisé (50) par ledit dispositif d'interface ;
- un module de configuration configuré pour configurer le terminal de l'utilisateur (10) de sorte qu'une seconde requête (RR2) soit émise par le terminal de l'utilisateur (10), destinée à être transmise vers un serveur de résolution (30, 40) associé audit dispositif d'interface (20), lorsque la première requête reçue (RR) est détectée comme étant destinée à être transmise vers un serveur non autorisé ; et,
- un module de transmission configuré pour transmettre vers un serveur de résolution (30, 40) associé audit dispositif d'interface (20), une seconde requête (RR2) reçue par ledit module de réception ou une troisième requête (RR3) générée à partir de la seconde requête (RR2) par le dispositif d'interface (20), ladite seconde requête (RR2) étant destinée à être émise vers ledit serveur de résolution (30, 40) associé audit dispositif d'interface (20).

11. Système de traitement de requêtes comportant un terminal d'un utilisateur (10) configuré pour accéder à un réseau de communication (200) et un dispositif d'interface (20) conforme à la revendication 10 permettant l'accès dudit terminal de l'utilisateur (10) audit réseau de communication (200).

12. Programme d'ordinateur comprenant une séquence d'instructions pour la mise en œuvre du procédé de traitement conforme à l'une des revendications 1 à 9, lorsqu'il est chargé et exécuté par un processeur.

13. Support d'informations lisible par un ordinateur, sur lequel est enregistré un programme d'ordinateur comprenant une séquence d'instructions pour la mise en œuvre du procédé de traitement conforme à l'une des revendications 1 à 9, lorsqu'il est chargé dans et exécuté par un processeur.

## Patentansprüche

1. Verfahren zur Verarbeitung von Anforderungen zur Auflösung eines Domänennamens, die von einem Benutzerendgerät (10) ausgesendet werden, wobei das Verarbeitungsverfahren durch eine Schnittstellenvorrichtung (20) ausgeführt wird, die den Zugang des Benutzerendgeräts (10) zu einem Kommunikationsnetz (200) ermöglicht, wobei das Verarbeitungsverfahren,
dann, wenn eine empfangene (E1) erste Anforderung (RR), die dazu bestimmt ist, zu einem nicht autorisierten Auflösungsserver (50) übertragen zu werden, durch die Schnittstellenvorrichtung (20) detektiert wird (E2 bis E5; E2' bis E5'), Folgendes umfasst:
- die Blockierung (E12a; E12a') der Übertragung der empfangenen ersten Anforderung (RR);
- die Konfiguration (E12b; E12b') des Benutzerendgeräts (10), so dass eine zweite Anforderung (RR2) durch das Benutzerendgerät (10) ausgesendet wird, die zu einem Auflösungsserver (30, 40) übertragen werden soll, der der Schnittstellenvorrichtung (20) zugeordnet ist;
- den Empfang (E6; E6'; E6") der zweiten Anforderung (RR2) durch die Schnittstellenvorrichtung (20) infolge der Ausführung der Blockierung (E12a; E12a') der empfangenen ersten Anforderung (RR); und
- die Übertragung (E7; E7'; E7") der empfangenen zweiten Anforderung (RR2) oder einer dritten Anforderung (RR3), die durch die Schnittstellenvorrichtung (20) aus der empfangenen zweiten Anforderung (RR2) erzeugt wird, zum Auflösungsserver (30, 40), der der Schnittstellenvorrichtung (20) zugeordnet ist.

2. Verfahren nach Anspruch 1, wobei ein nicht autorisierter Server (50) ein Server, der von den Auflösungsservern (30, 40) verschieden ist, die der Schnittstellenvorrichtung (20) zugeordnet sind, und/oder ein Server, der ein Teil einer Liste von so genannten durch den Anbieter des Zugangs zum Kommunikationsnetz (200) nicht autorisierten Servern (50) ist, ist.

3. Verarbeitungsverfahren nach Anspruch 1, **dadurch gekennzeichnet, dass** es Folgendes umfasst:
- die Bestimmung (E4; E4') einer Netzadresse, die den Server darstellt, für den die erste Anforderung (RR) bestimmt ist, aus der empfangenen ersten Anforderung (RR); und
- die Überprüfung (E5; E5') der bestimmten Netzadresse, um zu bestimmen, ob die bestimmte Netzadresse einem nicht autorisierten Server (50) entspricht, durch die Schnittstellenvorrichtung.

4. Verarbeitungsverfahren nach Anspruch 1, **dadurch gekennzeichnet, dass** es die Bestimmung (E3; E3') eines Ports der Schnittstellenvorrichtung (20) aus der empfangenen ersten Anforderung (RR) umfasst, der als Ziel der empfangenen Anforderung vorgesehen ist, wenn der bestimmte Port einem Port entspricht, der es ermöglicht, eine gesicherte Verbindung aufzubauen, wobei das Verfahren außerdem Folgendes umfasst:
- die Bestimmung (E4; E4') einer Netzadresse, die den Server darstellt, für den die erste Anforderung bestimmt ist, aus der empfangenen ersten Anforderung (RR), und
- die Überprüfung (E5; E5') der bestimmten Netzadresse, um zu bestimmen, ob die bestimmte Netzadresse einem nicht autorisierten Server (50) entspricht, durch die Schnittstellenvorrichtung.

5. Verarbeitungsverfahren nach Anspruch 4, **dadurch gekennzeichnet, dass** dann, wenn der bestimmte Port einem Port entspricht, der es ermöglicht, eine gesicherte Verbindung aufzubauen, und das Ergebnis der Überprüfung (E5; E5') der Netzadresse darin besteht, dass die Adresse weder einem Server (30, 40), der der Schnittstellenvorrichtung (20) zugeordnet ist, noch einer Netzadresse eines Servers in der Liste von nicht autorisierten Servern (50) entspricht, das Verarbeitungsverfahren außerdem Folgendes umfasst:
- die Erzeugung (E8') einer verschlüsselten Testanforderung (RT), die zum Server ausgesendet werden soll, der der bestimmten Netzadresse entspricht;
- die Aussendung (E9') der Testanforderung (RT) zum bestimmten Port; und
- dann, wenn die Schnittstellenvorrichtung (20) eine Antwort auf die Testanforderung (RT) empfängt, die vom Server stammt, die Identifikation (E11') des Servers (50) als nicht autorisierten Server.

6. Verarbeitungsverfahren nach Anspruch 1, **dadurch gekennzeichnet, dass** es außerdem Folgendes umfasst:
- den Empfang (E1"), der vom Benutzerendgerät (10) stammt, einer nicht verschlüsselten Auflösungsanforderung mit einer vordefinierten Zeichenkette; und
- die Aussendung (E12c") einer Antwort zum Benutzerendgerät (10), die einen Fehler darstellt, der dem Benutzerendgerät (10) angibt, keine verschlüsselten Anforderungen zu erzeugen,
- den Empfang einer zweiten Anforderung (RR2), die zu einem der Schnittstellenvorrichtung (20) zugeordneten Server (30, 40) ausgesendet werden soll, der infolge der Aussendung der Antwort, die einen Fehler darstellt, ausgeführt wird.

7. Verarbeitungsverfahren nach Anspruch 1, **dadurch gekennzeichnet, dass** es außerdem die Erzeugung einer Fehlermeldung umfasst, die für das Benutzerendgerät (10) bestimmt ist, die es über die Detektion einer Anforderung informiert, die zu einem durch den Anbieter des Zugangs zum Internet nicht autorisierten Server (50) übertragen werden soll.

8. Verarbeitungsverfahren nach Anspruch 1, **dadurch gekennzeichnet, dass** die zweite Anforderung (RR2) durch die Benutzervorrichtung (10) verschlüsselt wird.

9. Verarbeitungsverfahren nach Anspruch 1, **dadurch gekennzeichnet, dass** die dritte Anforderung (RR3), die aus der zweiten Anforderung (RR2) erzeugt wird, für einen Auflösungsserver unter einer vordefinierten Untergruppe von Servern (30, 40) bestimmt ist, die der Schnittstellenvorrichtung (20) zugeordnet sind, oder der verschlüsselten zweiten Anforderung (RR2) entspricht.

10. Schnittstellenvorrichtung (20), die den Zugang eines Benutzerendgeräts zu einem Kommunikationsnetz (200) ermöglicht, wobei die Schnittstellenvorrichtung (20) die folgenden Module zum Verarbeiten von Anforderungen zur Auflösung eines Domänennamens umfasst, die durch das Benutzerendgerät (10) ausgesendet werden:
- ein Empfangsmodul, das zum Empfangen einer empfangenen ersten Anforderung (RR) konfiguriert ist,
- ein Detektionsmodul, das zum Detektieren, ob die empfangene erste Anforderung (RR) zu einem nicht autorisierten Auflösungsserver (50) übertragen werden soll, durch die Schnittstellenvorrichtung konfiguriert ist;
- ein Blockierungsmodul, das dazu konfiguriert ist, die Übertragung der empfangenen ersten Anforderung (RR) zu blockieren, wenn die empfangene (E1) erste Anforderung (RR) als zu einem nicht autorisierten Server (50) zu übertragen durch die Schnittstellenvorrichtung detektiert wird (E2 bis E5; E2' bis E5');
- ein Konfigurationsmodul, das dazu konfiguriert ist, das Benutzerendgerät (10) derart zu konfigurieren, dass eine zweite Anforderung (RR2) durch das Benutzerendgerät (10) ausgesendet wird, die zu einem Auflösungsserver (30, 40) übertragen werden soll, der der Schnittstellenvorrichtung (20) zugeordnet ist, wenn die empfangene erste Anforderung (RR) als zu einem nicht autorisierten Server zu übertragen detektiert wird; und
- ein Übertragungsmodul, das dazu konfiguriert ist, eine zweite Anforderung (RR2), die durch das Empfangsmodul empfangen wird, oder eine dritte Anforderung (RR3), die aus der zweiten Anforderung (RR2) durch die Schnittstellenvorrichtung (20) erzeugt wird, zu einem Auflösungsserver (30, 40), der der Schnittstellenvorrichtung (20) zugeordnet ist, zu übertragen, wobei die zweite Anforderung (RR2) zum Auflösungsserver (30, 40) ausgesendet werden soll, der der Schnittstellenvorrichtung (20) zugeordnet ist.

11. System zur Verarbeitung von Anforderungen mit einem Benutzerendgerät (10), das dazu konfiguriert ist, auf ein Kommunikationsnetz (200) zuzugreifen, und einer Schnittstellenvorrichtung (20) nach Anspruch 10, die den Zugang des Benutzerendgeräts (10) zum Kommunikationsnetz (200) ermöglicht.

12. Computerprogramm, das eine Folge von Anweisungen enthält, um das Verarbeitungsverfahren nach einem der Ansprüche 1 bis 9 auszuführen, wenn es durch einen Prozessor geladen und ausgeführt wird.

13. Computerlesbarer Informationsträger, auf dem ein Computerprogramm aufgezeichnet ist, das eine Folge von Anweisungen enthält, um das Verarbeitungsverfahren nach einem der Ansprüche 1 bis 9 auszuführen, wenn es in einen Prozessor geladen und durch diesen ausgeführt wird.

## Claims

1. Method for processing domain name resolution requests sent by a user terminal (10), said processing method being implemented by an interface device (20) allowing the user terminal (10) to access a communication network (200), said processing method,
when a received (E1) first request (RR) is detected (E2 to E5; E2' to E5') as being intended to be transmitted to a resolution server (50) not authorized by said interface device (20), comprising:
- blocking (E12a; E12a') the transmission of said received first request (RR);
- configuring (E12b; E12b') the user terminal (10) such that a second request (RR2) is sent by the user terminal (10), intended to be transmitted to a resolution server (30, 40) associated with said interface device (20);
- the interface device (20) receiving (E6; E6'; E6") the second request (RR2) following implementing of the blocking (E12a; E12a') of the received first request (RR); and
- transmitting (E7; E7'; E7"), to said resolution server (30, 40) associated with said interface device (20), said received second request (RR2) or a third request (RR3) generated by the interface device (20) based on said received second request (RR2).

2. Method according to Claim 1, wherein an unauthorized server (50) is a server different from the resolution servers (30, 40) associated with said interface device (20) and/or a server forming part of what is termed a list of servers (50) not authorized by the access provider providing access to said communication network (200).

3. Processing method according to Claim 1, **characterized in that** it comprises:
- determining (E4; E4'), based on the received first request (RR), a network address representative of the server to which the first request (RR) is destined; and
- checking (E5; E5') the determined network address in order to determine whether the determined network address corresponds to a server (50) not authorized by the interface device.

4. Processing method according to Claim 1, **characterized in that** it comprises determining (E3; E3'), based on the first request (RR) received from a port of the interface device (20) designated for the destination of said received request, whether said determined port corresponds to a port for establishing a secure connection, said method furthermore comprising:
- determining (E4; E4'), based on the received first request (RR), a network address representative of the server to which the first request is destined, and
- checking (E5; E5') said determined network address in order to determine whether the determined network address corresponds to a server (50) not authorized by the interface device.

5. Processing method according to Claim 4, **characterized in that**, if said determined port corresponds to a port for establishing a secure connection and the result of the checking (E5; E5') of said network address is that said address does not correspond to a server (30, 40) associated with the interface device (20) or to a network address of a server in the list of unauthorized servers (50), said processing method furthermore comprises:
- generating (E8') an encrypted test request (RT) intended to be sent to the server corresponding to the determined network address;
- sending (E9') said test request (RT) to said determined port; and
- if the interface device (20) receives a response to the test request (RT) from the server, identifying (E11') said server (50) as being an unauthorized server.

6. Processing method according to Claim 1, **characterized in that** it furthermore comprises:
- receiving (E1"), from the user terminal (10), an unencrypted resolution request comprising a predefined character string; and
- sending (E12c"), to the user terminal (10), a response representative of an error telling the user terminal (10) not to generate encrypted requests,
- a second request (RR2) intended to be sent to a server (30, 40) associated with the interface device (20) being received following the sending of said response representative of an error.

7. Processing method according to Claim 1, **characterized in that** it furthermore comprises generating an error message destined for the user terminal (10), informing it of the detection of a request intended to be transmitted to a server (50) not authorized by the Internet access provider.

8. Processing method according to Claim 1, **characterized in that** said second request (RR2) is encrypted by the user device (10).

9. Processing method according to Claim 1, **characterized in that** the third request (RR3) generated based on said second request (RR2) is destined for a resolution server from among a predefined subgroup of servers (30, 40) associated with the interface device (20) or corresponds to the encrypted second request (RR2).

10. Interface device (20) allowing a user terminal to access a communication network (200), said interface device (20) comprising the following modules for processing domain name resolution requests sent by said user terminal (10):
- a reception module configured so as to receive a received first request (RR);
- a detection module configured so as to detect whether the received first request (RR) is intended to be transmitted to a resolution server (50) not authorized by said interface device;
- a blocking module configured so as to block the transmission of the received first request (RR) when the received (E1) first request (RR) is detected (E2 to E5; E2' to E5') as being intended to be transmitted to a server (50) not authorized by said interface device;
- a configuration module configured so as to configure the user terminal (10) such that a second request (RR2) is sent by the user terminal (10), intended to be transmitted to a resolution server (30, 40) associated with said interface device (20), when the received first request (RR) is detected as being intended to be transmitted to an unauthorized server; and
- a transmission module configured so as to transmit, to a resolution server (30, 40) associated with said interface device (20), a second request (RR2) received by said reception module or a third request (RR3) generated based on the second request (RR2) by the interface device (20), said second request (RR2) being intended to be sent to said resolution server (30, 40) associated with said interface device (20).

11. Request processing system comprising a user terminal (10) configured so as to access a communication network (200) and an interface device (20) according to Claim 10 allowing said user terminal (10) to access said communication network (200).

12. Computer program comprising a sequence of instructions for implementing the processing method according to one of Claims 1 to 9 when it is loaded and executed by a processor.

13. Computer-readable information medium on which there is recorded a computer program comprising a sequence of instructions for implementing the processing method according to one of Claims 1 to 9 when it is loaded into and executed by a processor.
